# EUROPEAN PATENT APPLICATION

(11) **EP 2 690 388 A1**
(43) Date of publication of application: **29.01.2014**
(21) Application number: 13170025.4
(22) Date of filing: 31.05.2013
(51) Int. Cl.: F28D 9/00, F28F 3/04, F28F 3/08, F28F 13/12

(54) **Heat exchanger**

(30) Priority: 27.07.2012 TW 101214514 U
(71) Applicant: Chen, Huang-Han, 241 New Taipei City (TW)
(72) Inventor: Chen, Huang-Han, 241 New Taipei City (TW)
(74) Representative: Viering, Jentschura & Partner

(57) **Abstract**

A stacked or laminated plate heat exchanger is provided, which is built up of plates (called fins) comprising openings forming fluid channels (called grooves).

The heat exchanger (10) includes at least two fin sets (100, 200, 300, 400, 500, 600) with multiple communicating-groove structures (120, 130, 220, 230) and connecting-groove structures (140, 240) respectively, wherein each connecting-groove structure has multiple connecting-groove assemblies. In each fin, a communicating-groove structure is not communicated with a connecting-groove structure, and one communicating-groove structure is not communicated with another communicating-groove structure. When the fins are assembled, a communicating-groove structure of one fin is communicated with the adjacent communicating-groove structure through a connecting-groove structure of another fin. In the invention, the heat-exchange fluid is forced to be confluent or separated constantly when the heat-exchange fluid flows into the heat exchanger. This increases the contact area between the heat-exchange fluid and heat exchanger substantially, and increases the rate of the heat-exchange process of heat-exchange fluids to achieve good heat-exchange performance.

## Description

### BACKGROUND OF THE INVENTION

### Field of the Invention

The invention relates to a heat exahanger. More particularly, the invention relates to a heat exahanger having a good heat-exchange efficiency.

### Description of Related Art

Heat exahange technology is widely applied in various electronic products. Functions of heat exahange technology include heat dissipation, cooling, exchange of hot and cold fluid, or heat recovery. No matter what forms of heat exchangers have one common ground: the heat-exchange efficiency is based on the heat exchange area.

Now, electronic products become exquisite gradually, so that all kinds of electronic products become smaller and thinner. Thus, the heat exchanger inside the smaller and thinner electronic product still must have enough heat exchange area. But, its a difficult design. As the same, electronic products also have higher heat-generating efficiency. However, the heat-exchange such as U.S. Patent 5,462,112 still could not heat dissipate for the electronic products with higher heat-generating efficiency. Thus, a heat exahanger having a good heat-exchange efficiency is required greatly.

### SUMMARY OF THE INVENTION

The invention is directed to a heat exchanger that increases the contacting area between the fins and heat-exchange fluid substantially, and results in heat exchange operation efficiently.

In the invention, a heat exchanger is provided. The heat exchanger includes at least a first fin and at least a second fin. Each first fin has a first body, a first communicating-groove structure, a second communicating-groove structure, and a first connecting-groove structure. The first communicating-groove structure, the second communicating-groove structure, and the first connecting-groove structure are disposed in the first body. The first connecting-groove structure has multiple first connecting-groove assemblies arranged in the first body along a disposing axis. Each second fin has a second body, a third communicating-groove structure, a fourth communicating-groove structure, and a second connecting-groove structure. The third communicating-groove structure, the fourth communicating-groove structure, and the second connecting-groove structure are disposed in the second body. The second connecting-groove structure has multiple second connecting-groove assemblies arranged in the second body along the disposing axis. Each first fin and each second fin are connected along an assembly axis. The first communicating-groove structure and the second communicating-groove structure are communicated through the second connecting-groove assemblies. The third communicating-groove structure and the fourth communicating-groove structure are communicated through the first connecting-groove assemblies.

The first communicating-groove structure, the second connecting-groove structure, and the second communicating-groove structure constitute a first guiding channel, and the third communicating-groove structure, the first connecting-groove structure, and the fourth communicating-groove structure constitute a second guiding channel, wherein a first heat-exchange fluid flows in the first guiding channel, and a second heat-exchange fluid flows in the second guiding channel.

In one embodiment of the present invention, one end of each second connecting-groove assembly of the second fin is overlapped with the first communicating-groove structure of the adjacent first fin in a connecting axis. The other end of each second connecting-groove assembly is overlapped with the second communicating-groove structure of the first fin. One end of each first connecting-groove assembly of the first fin is overlapped with the third communicating-groove structure of the adjacent second fin along the connecting axis. The other end of each first connecting-groove assembly is overlapped with the fourth communicating-groove structure of the second fin.

In one embodiment of the present invention, the assembly axis, the disposing axis, and the connecting axis are vertical to each other. Each first fin and each second fin are staggered along the assembly axis, the first guiding channel and the second guiding channel are not communicated with each other, wherein the second fin is an inverted state of the first fin.

In one embodiment of the present invention, the first communicating-groove structure has multiple first communicating-groove assemblies arranged in the first body along the disposing axis, and the third communicating-groove structure has multiple third communicating-groove assemblies arranged in the second body along the disposing axis. One end of each second connecting-groove assembly of the second fin is overlapped with the first communicating-groove assembly of the adjacent the first fin along the connecting axis. The other end of each second connecting-groove assembly is overlapped with the second communicating-groove structure along the connecting axis. One end of each first connecting-groove assembly of the first fin is overlapped with the third communicating-groove assembly of the adjacent second fin along the connecting axis. The other end of each first connecting-groove assembly is overlapped with the fourth communicating-groove structure along the connecting axis.

In one embodiment of the present invention, the first communicating-groove assemblies and the first connecting-groove assemblies arranged in the first body are staggered along the disposing axis, and the third communicating-groove assemblies and the second connecting-groove assemblies arranged in the second body are staggered along the disposing axis.

In one embodiment of the present invention, each first communicating-groove assembly has at least a first communicating-groove unit arranged in the first body along the connecting axis, and each first connecting-groove assembly has at least a first connecting-groove unit arranged in the first body along the connecting axis. Each third communicating-groove assembly has at least a third communicating-groove unit arranged in the second body along the connecting axis, and each second connecting-groove assembly has at least a second connecting-groove unit arranged in the second body along the connecting axis. One end of the second connecting-groove unit of the second fin is overlapped with one end of the first communicating-groove unit of the adjacent first fin. The other end of the second connecting-groove unit is overlapped with one end of another first communicating-groove unit of the first fin or the second communicating-groove structure of the first fin. One end of the first connecting-groove unit of the first fin is overlapped with one end of the third communicating-groove unit of the adjacent second fin. The other end of the first connecting-groove unit is overlapped with one end of another third communicating-groove unit of the second fin or the fourth communicating-groove structure of the second fin.

In one embodiment of the present invention, the two first communicating-groove units overlapped with the second connecting-groove unit are arranged in the first body along the connecting axis closely, and the two third communicating-groove units overlapped with the first connecting-groove unit are arranged in the second body along the connecting axis closely.

In one embodiment of the present invention, the projection area of the first communicating-groove structure of the first fin in the second body and the projection area of the second communicating-groove structure in the second body are not overlapped with the third communicating-groove structure and the fourth communicating-groove structure. The projection area of the first connecting-groove structure of the first fin in the second body is not overlapped with the second connecting-groove structure.

In one embodiment of the present invention, the heat exchanger further includes a third fin and a fourth fin, wherein the third fin and the fourth fin are disposed in the two sides of the assembly of the first fin and the second fin along the assembly axis respectively. The third fin has a first inlet structure and a first outlet structure, and the fourth fin has a second inlet structure and a second the outlet structure, wherein the first inlet structure and the first outlet structure are connected to the two ends of the first guiding channel, the second inlet structure and the second outlet structure are connected to the two ends of the second guiding channel. The first inlet structure is communicated with the first communicating-groove structure, the first outlet structure is communicated with the second communicating-groove structure, the second inlet structure is communicated with the third communicating-groove structure, and the second outlet structure is communicated with the fourth communicating-groove structure.

In one embodiment of the present invention, the projection area of the first inlet structure and the first outlet structure of the third fin in the fourth fin is not overlapped with the second inlet structure and the second the outlet structure, and the fourth fin is an inverted state of the third fin.

In one embodiment of the present invention, the first inlet structure has multiple first inlet units arranged along the disposing axis, and the second inlet structure has multiple second inlet units arranged along the disposing axis. The first inlet units are communicated with the first communicating-groove structure, and the second inlet units are communicated with the third communicating-groove structure.

In one embodiment of the present invention, the projection area of the first inlet units in the first body is overlapped with the first communicating-groove structure, and the projection area of the second inlet units in the second body is overlapped with the third communicating-groove structure.

In one embodiment of the present invention, the heat exchanger further includes a fifth fin and a sixth fin, wherein the fifth fin and the sixth fin are disposed in the two sides of the assembly of the first fin, the second fin, the third fin, and the fourth fin along the assembly axis respectively. The fifth fin has a first through hole and a second through hole, and the sixth fin has a third through hole and a fourth through hole. One side of the first inlet structure is communicated with the first communicating-groove structure, and another side of the first inlet structure is communicated with the first through hole. One side of the first outlet structure is communicated with the second communicating-groove structure, and another side of the first outlet structure is communicated with the second through hole. One side of the second inlet structure is communicated with the third communicating-groove structure, and another side of the second inlet structure is communicated with the third through hole. One side of the second outlet structure is communicated with the fourth communicating-groove structure, and another side of the second outlet structure is communicated with the fourth through hole. The sixth fin is the inverted state of the fifth fin.

As described in the embodiments of the invention, in the invention of the heat exchanger, at least two fins are set with multiple communicating-groove structures and connecting-groove structure in the heat exchanger respectively. In each fin, a communicating-groove structure is not communicated with a connecting-groove structure, and one communicating-groove structure is not communicated with another communicating-groove structure. When the fins are assembled, a communicating-groove structure of one fin is communicated with the adjacent communicating-groove structure through a connecting-groove structure of another fin. The communicating-groove structures of each fin constitute a guiding channel by the connecting-groove structure of another fin when the fins are assembled. Thus, the heat exchanger of the invention has two guiding channels to perform a heat-exchange process for the fluids with different temperatures.

In addition, since the heat exchanger of the invention is assembled by at least two types of fins staggered with each other and each fin has multiple communicating-groove structures and a connecting-groove structure, the heat-exchange fluid is forced to be confluent or separated constantly when The heat-exchange fluid flows into the heat exchanger. This increases the contact area between the heat-exchange fluid and heat exchanger substantially, and increases the rate of the heat-exchange process of heat-exchange fluids to achieve good heat-exchange performance.

Other features and advantages of the invention will be further understood from the further technological features disclosed by the embodiments of the invention wherein there are shown and described embodiments of this invention, simply by way of illustration of best modes to carry out the invention.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

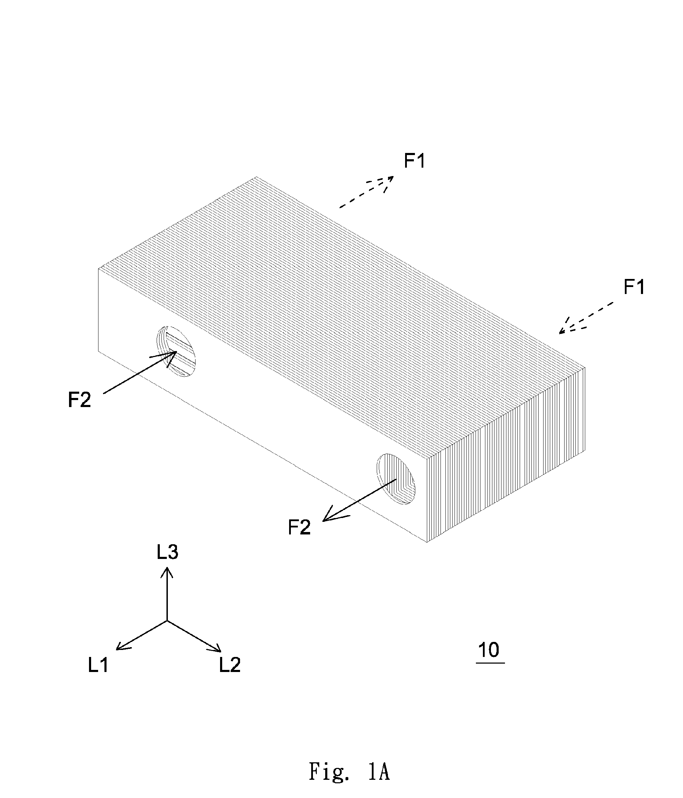

FIG. 1A is a schematic view illustrating the heat exchanger according to one embodiment of the present invention.

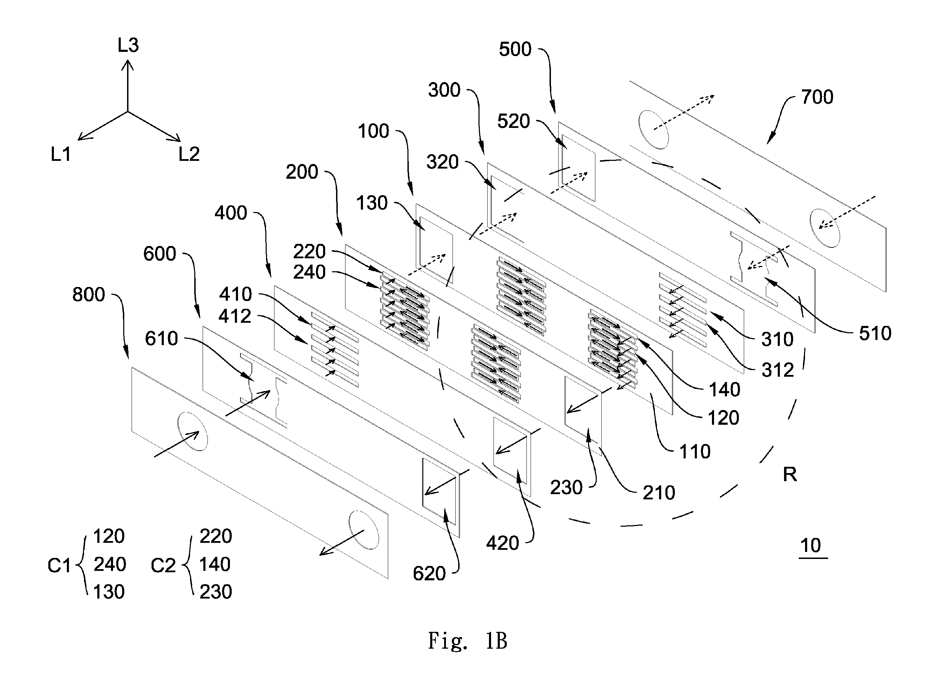

FIG. 1B is an exploded view illustrating the heat exchanger depicted in FIG. 1A.

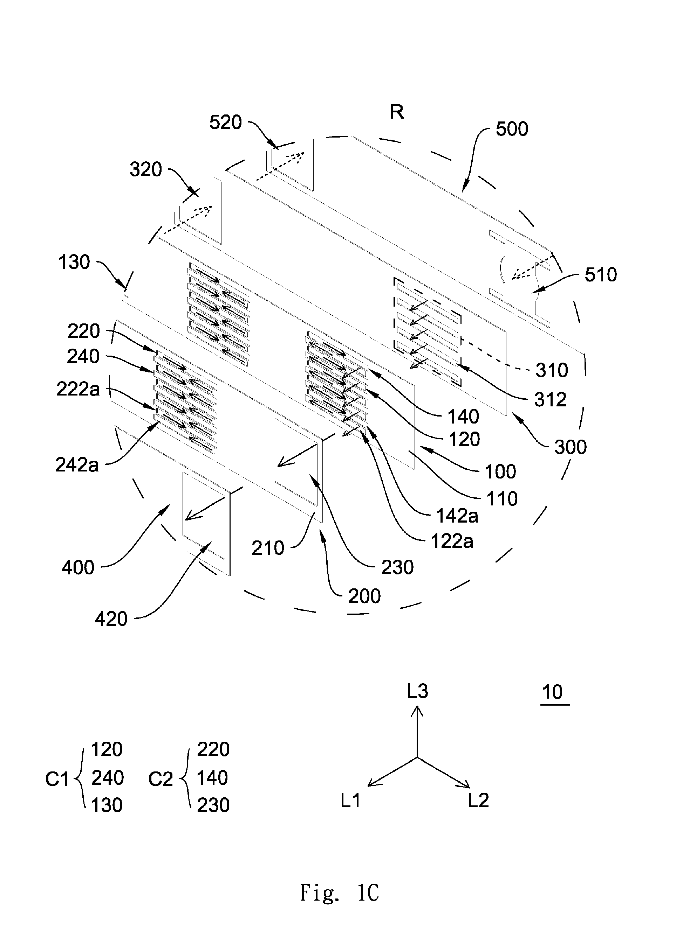

FIG. 1C is an enlarged schematic view illustrating a region of R depicted in FIG. 1B.

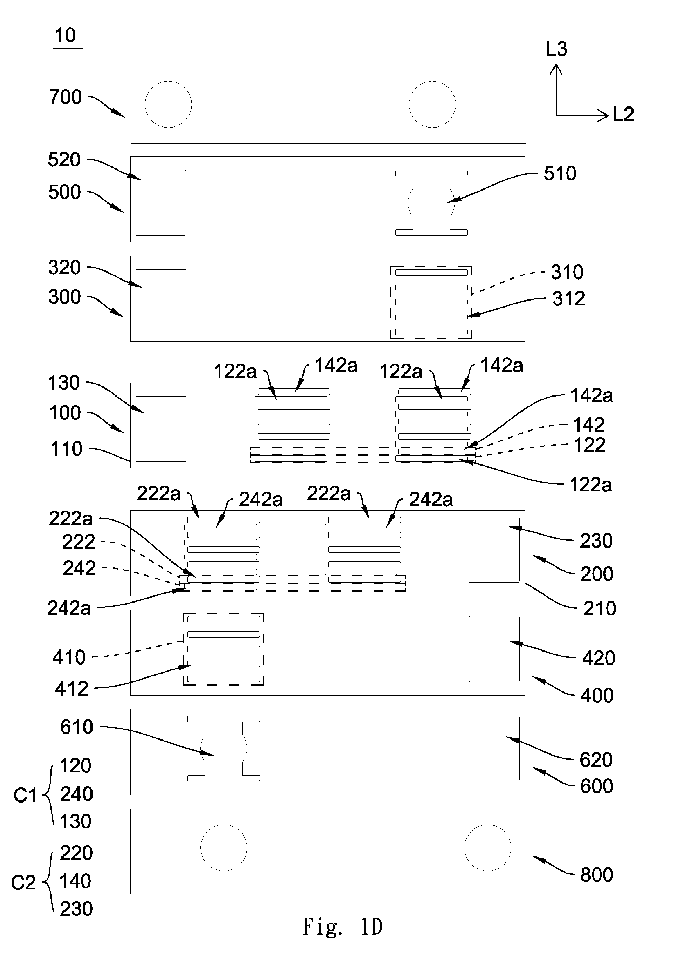

FIG. 1D is a plane schematic view illustrating the heat exchanger depicted in FIG. 1B.

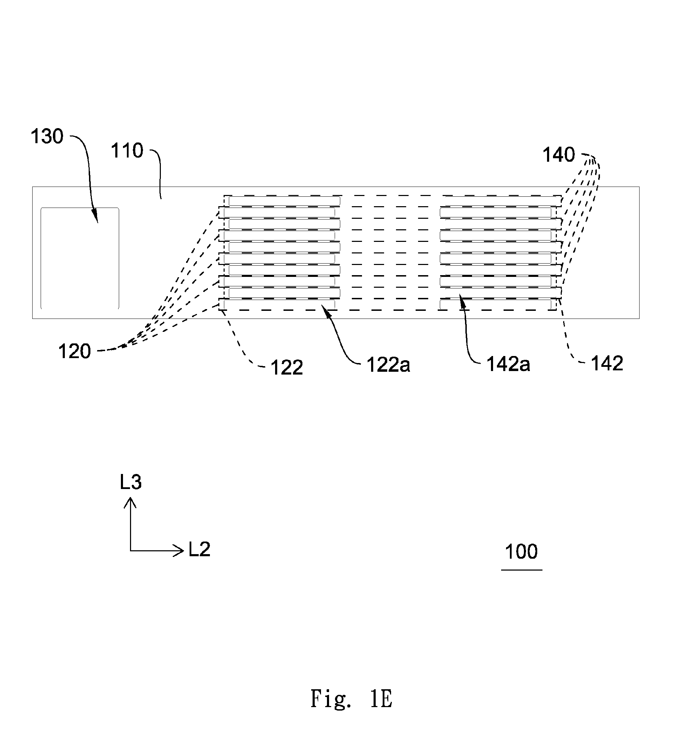

FIG. 1E is an enlarged schematic view illustrating the first fin depicted in FIG. 1D.

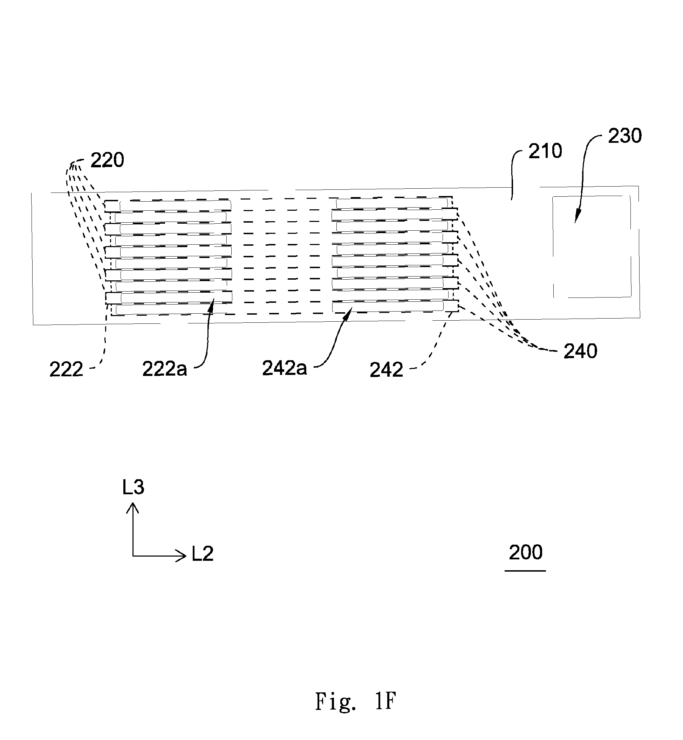

FIG.1F is an enlarged schematic view illustrating the second fin depicted in FIG. 1D.

### DESCRIPTION OF EMBODIMENTS

Other features and advantages of the invention will be further understood from the further technological features disclosed by the embodiments of the invention wherein there are shown and described embodiments of this invention, simply by way of illustration of best modes to carry out the invention.

FIG. 1A is a schematic view illustrating the heat exchanger according to one embodiment of the present invention. FIG. 1B is an exploded view illustrating the heat exchanger depicted in FIG. 1A. FIG. 1C is an enlarged schematic view illustrating a region of R depicted in FIG. 1B. FIG. 1D is a plane schematic view illustrating the heat exchanger depicted in FIG. 1B. FIG. 1E is an enlarged schematic view illustrating the first fin depicted in FIG. 1D. FIG. 1F is an enlarged schematic view illustrating the second fin depicted in FIG. 1D. Referring to FIG. 1A, FIG. 1B, FIG. 1C, FIG. 1D, FIG. 1E, and FIG. 1F, the heat exchanger 10 of the present embodiment includes a first fin 100, a second fin 200, a third fin 300, a fourth fin 400, a fifth fin 500, and a sixth fin 600. The first fin 100, the second fin 200, the third fin 300, the fourth fin 400, the fifth fin 500, and sixth fin 600 are, for example, rectangular sheets, and are contacted along an assembly axis L1.

The third fin 300 and the fourth fin 400 are disposed in the two sides of the assembly of the first fin 100 and the second fin 200 along the assembly axis L1 respectively. The fifth fin 500 and sixth fin 600 are disposed in the two sides of the assembly of the first fin 100, the second fin 200, the third fin 300, and the fourth fin 400 along the assembly axis L1 respectively. In the present embodiment, the second fin 200 is, for example, an inverted state of the first fin 100. The inverted state is, for example, the state of the rotating 180 degrees of the first fin 100 along the assembly axis L1. The second fin 200 also be other inverted states of the first fin 100, including but not limited to this type. In addition, the fourth fin 400 is, for example, an inverted state of the third fin 300, and the sixth fin 600 is, for example, an inverted state of the fifth fin 500.

The heat exchanger 10 of the present embodiment is constituted of at least a first fin 100 and at least a second fin 200 mainly, and the first fin 100 and the second fin 200 will be illustrated in detail as follow. The first fin 100 has a first body 110, a first communicating-groove structure 120, a second communicating-groove structure 130, and a first connecting-groove structure 140, wherein the first communicating-groove structure 120, the second communicating-groove structure 130, and the first connecting-groove structure 140 are disposed in first body 110. In addition, the second fin 200 has a second body 210, a third communicating-groove structure 220, a fourth communicating-groove structure 230, and a second connecting-groove structure 240, wherein the third communicating-groove structure 220, the fourth communicating-groove structure 230, and the second connecting-groove structure 240 are disposed in the second body 210.

When the first fin 100, the second fin 200, the third fin 300, the fourth fin 400, the fifth fin 500, and sixth fin 600 are contacted along the assembly axis L1, the second connecting-groove structure 240 is communicated with the first communicating-groove structure 120 and the second communicating-groove structure 130. The first connecting-groove structure 140 is communicated with the third communicating-groove structure 220 and the fourth communicating-groove structure 230. In detail, the first connecting-groove structure 140 is constituted of multiple first connecting-groove assemblies 142 arranged in the first body 110 along a disposing axis L3 in the present embodiment. The second connecting-groove structure 240 is constituted of multiple second connecting-groove assemblies 242 arranged in the second body 210 along the disposing axis L3. The disposing axis L3 is, for example, vertical to the assembly axis L1. One end of each second connecting-groove assembly 242 of the second fin 200 is overlapped with the first communicating-groove structure 120 of the adjacent first fin 100 along a connecting axis L2. The other end of the second connecting-groove assembly 242 is overlapped with the second communicating-groove structure 130 of the first fin 100. One end of each first connecting-groove assembly 142 of the first fin 100 is overlapped with the third communicating-groove structure 220 of the adjacent second fin 200 along the connecting axis L2. The other end of the first connecting-groove assembly 142 is overlapped with the fourth communicating-groove structure 230 of the second fin 200. Therefore, the first communicating-groove structure 120, the second connecting-groove structure 240, and the second communicating-groove structure 130 constitute the first guiding channel C1, and the third communicating-groove structure 220, the first connecting-groove structure 140, and the fourth communicating-groove structure 230 constitute the second guiding channel C2. The assembly axis L1, the disposing axis L3, and the connecting axis L2 are, for example, vertical to each other.

Further, in the present embodiment, the projection area of the first communicating-groove structure 120 and the second communicating-groove structure 130 of the first fin 100 in the second body 210 is not overlapped with the third communicating-groove structure 220 and the fourth communicating-groove structure 230. The projection area of the first connecting-groove structure 140 of the first fin 100 in the second body 210 is not overlapped with the second connecting-groove structure 240. That is, when the first fin 100 and the second fin 200 are contacted along the assembly axis L1, the first guiding channel C1 and the second guiding channel C2 are not communicated with each other. Therefore, the second heat-exchange fluid F2 can flow to the first connecting-groove structure 140 from the third communicating-groove structure 220 smoothly, and flow to the fourth communicating-groove structure 230 from the first connecting-groove structure 140 smoothly. The first heat-exchange fluid F1 can flow to the second connecting-groove structure 240 from the first communicating-groove structure 120 smoothly, and flow to the second communicating-groove structure 130 from the second connecting-groove structure 240 smoothly.

Worth mentioning is that, the first connecting-groove structure 140 and the second connecting-groove structure 240 are constituted of multiple first connecting-groove assemblies 142 and multiple second connecting-groove assemblies 242 respectively, the first heat-exchange fluid F1 flowed into the first guiding channel C1 and the second heat-exchange fluid F2 flow into the second guiding channel C2 can be separated by the first connecting-groove assemblies 142 and the second connecting-groove assembly 242 respectively. Therefore, the heat-exchange efficiency between the heat-exchange fluid and fins is upgraded by the separations of the first heat-exchange fluid F1 flowed into the first guiding channel C1 and the second heat-exchange fluid F2 flowed into the second guiding channel C2. The above separation further makes a heat-exchange efficiency between the first heat-exchange fluid F1 in the first guiding channel C1 and the second heat-exchange fluid F2 in the second guiding channel C2.

In the present embodiment, the first guiding channel C1 is, for example, capable of flowing for the first heat-exchange fluid F1 with higher temperature, and the second guiding channel C2 is, for example, capable of flowing for the second heat-exchange fluid F2 with lower temperature. The first guiding channel C1 is, for example, a 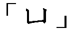 type guiding channel. The second guiding channel C2 is, for example, a 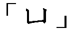 type guiding channel. The across area of the first guiding channel C1 is, for example, across the cross-section of the heat exchanger 10. Similarly, the across area of the second guiding channel C2 also is, for example, across the cross-section of the heat exchanger 10. That is, the across area of the first guiding channel C1 and the across area of the second guiding channel C2 are similar substantially. Therefore, the first heat-exchange fluid F1 and the second heat-exchange fluid F2 can perform the heat-exchange process effectively by flowing across the heat exchanger 10 completely. The guiding direction of the fluid in the first guiding channel C1 and the guiding direction of the fluid in the second guiding channel C2 are, for example, clockwise or counterclockwise simultaneously.

From the above, in order to have a better heat-exchange efficiency by frequent separations, the first communicating-groove structure 120 is also constituted of multiple first communicating-groove assemblies 122 arranged in the first body 110 along the disposing axis L3, and the third communicating-groove structure 220 is constituted of multiple third communicating-groove assemblies 222 arranged in the second body 210 along the disposing axis L3 in the present embodiment. One end of each second connecting-groove assembly 242 of the second fin 200 is overlapped with the first communicating-groove assembly 122 of the adjacent first fin 100 along the connecting axis L2, and the other end of the second connecting-groove assembly 242 is overlapped with the second communicating-groove structure 130 in the connecting axis L2 when the first fin 100 and the second fin 200 are contacted. Similarly, one end of each first connecting-groove assembly 142 of the first fin 100 is overlapped with the third communicating-groove assembly 222 of the adjacent second fin 200 along the connecting axis L2, and the other end of the first connecting-groove assembly 142 is overlapped with the fourth communicating-groove structure 230 along the connecting axis L2.

Especially, in order to increase the heat-exchange area between the heat-exchange fluid and the fin, each first communicating-groove assembly 122 of the present embodiment has at least a first communicating-groove unit 122a arranged in the first body 110 along the connecting axis L2, each first connecting-groove assembly 142 has at least a first connecting-groove unit 142a arranged in the first body 110 along the connecting axis L2, each third communicating-groove assembly 222 has at least a third communicating-groove unit 222a arranged in the second body 210 along the connecting axis L2, and each second connecting-groove assembly 242 has at least a second connecting-groove unit 242a arranged in the second body 210 along the connecting axis L2. The connecting-groove unit or the communicating-groove unit is, for example, a strip type structure or other appropriate structure.

One end of the second connecting-groove unit 242a of the second fin 200 is overlapped with one end of the first communicating-groove unit 122a of the adjacent first fin 100, and the other end of the second connecting-groove unit 242a is overlapped with one end of another first communicating-groove unit 122a of the first fin 100 or the second communicating-groove structure 130 of the first fin 100. One end of the first connecting-groove unit 142a of the first fin 100 is overlapped with one end of the third communicating-groove unit 222aof the adjacent e second fin 200, and the other end of the first connecting-groove unit 142a is overlapped with one end of another third communicating-groove unit 222a of the second fin 200 or the fourth communicating-groove structure 230 of the second fin 200. The two first communicating-groove units 122a overlapped with the second connecting-groove unit 242a are arranged in the first body 110 along the connecting axis L2 adjacently, and the two third communicating-groove units 222a overlapped with the first connecting-groove unit 142a are arranged in the second body 210 along the connecting axis L2 adjacently. It increases the heat-exchange area between the heat-exchange fluid and the fin substantially by the design of each groove assembly having at least a groove unit, and further upgrades the heat-exchange efficiency of the heat exchanger 10. In the present embodiment, the first communicating-groove assembly 122 is, for example, constituted of two first communicating-groove units 122a. The first connecting-groove assembly 142 is, for example, constituted of two first connecting-groove units 142a. The third communicating-groove assembly 222 is, for example, constituted of two third communicating-groove units 222a. The second connecting-groove assembly 242 is, for example, constituted of two second connecting-groove units 242a. About the groove assembly is, for example, constituted of two groove units, the present invention does not have any limitation.

On the other hand, because of partial overlap between the end of the second connecting-groove unit 242a and the end of the first communicating-groove unit 122a, partial overlap between the end of second connecting-groove unit 242a and the end of the second communicating-groove structure 130, partial overlap between the end of the first connecting-groove unit 142a and the end of the third communicating-groove unit 222a, and partial overlap between the end of the first connecting-groove unit 142a and the end of the fourth communicating-groove structure 230, the heat-exchange fluid flowed to any connecting-groove unit or any communicating-groove unit be separated into two communicating-groove units with partial overlap or two connecting-groove units with partial overlap. The above heat-exchange fluid separated into two communicating-groove units or two connecting-groove units will be confluent to the connecting-groove unit overlapped with the two communicating-groove units simultaneously or the communicating-groove unit overlapped with the two communicating-groove units simultaneously. That is, the heat-exchange fluid will be separated and confluent in the process of flowing through each groove unit constantly. Therefore, there being have a maximum contact area between each fin and the heat-exchange fluid in the process of the heat-exchange fluid flowing through the heat exchanger 10. The heat-exchange process will be performed between the heat-exchange fluids flowing through each connecting-groove unit or communicating-groove unit and the heat exchanger 10, further make the heat exchanger 10 have a good heat-exchange efficiency.

Furthermore, in order to have a shorter and direct heat-exchange path between the first heat-exchange fluid F1 with higher temperature in the first guiding channel C1 and the second heat-exchange fluid F2 with lower temperature in the second guiding channel C2 in the present embodiment, the first communicating-groove assemblies 122 and the first connecting-groove assemblies 142 arranged in the first body 110 are staggered along the disposing axis L3, and the third communicating-groove assemblies 222 and the second connecting-groove assemblies 242 arranged in the second body 210 are staggered along the disposing axis L3 similarly. As a result, the first guiding channel C1 and the second guiding channel C2 are the relationship of the adjacent upper and lower. Therefore, there will be a shorter and direct heat-exchange path between the first heat-exchange fluid F1 with higher temperature in the first guiding channel C1 and the second heat-exchange fluid F2 with lower temperature in the second guiding channel C2, thereby allowing the heat-exchange process of the heat exchanger 10 efficiently.

Next, other types of fins in the present embodiment will be illustrated. The third fin 300 of the present embodiment has a first inlet structure 310 and a first outlet structure 320, and the fourth fin 400 has a second inlet structure 410 and a second the outlet structure 420. The first inlet structure 310 and the first outlet structure 320 are connected to the two ends of the first guiding channel C1, and the second inlet structure 410 and the second the outlet structure 420 are connected to the two ends of the second guiding channel C2. The first inlet structure 310 are the first communicating-groove structure 120 are communicated with each other, the first outlet structure 320 and the second communicating-groove structure 130 are communicated with each other, the second inlet structure 410 and the third communicating-groove structure 220 are communicated with each other, and the second the outlet structure 420 and the fourth communicating-groove structure 230 are communicated with each other. The projection area of the first inlet structure 310 and the first outlet structure 320of the third fin 300 in the fourth fin 400 is not overlapped with the second inlet structure 410 and the second the outlet structure 420. Similarly, in order to increase the heat-exchange area between the heat-exchange fluid and the fin, the first inlet structure 310 are also constituted of multiple first inlet units 312 arranged along the disposing axis L3, and the second inlet structure 410 are constituted of multiple second inlet units 412 arranged along the disposing axis L3. The projection area of the first inlet units 312 in first body 110 is overlapped with the first communicating-groove structure 120, and the projection area of the second inlet units 412 in the second body 210 is overlapped with the third communicating-groove structure 220. That is, the first inlet units 312 and the first communicating-groove structure 120 are communicated with each other, and the second inlet units 412 and the third communicating-groove structure 220 are communicated with each other.

In addition, the fifth fin 500 has a first through hole 510 and a second through hole 520, and the sixth fin 600 has a third through hole 610 and a fourth through hole 620. One side of the first inlet structure 310 is communicated with the first communicating-groove structure 120, and another side of the first inlet structure 310 is communicated with the first through hole 510. One side of the first outlet structure 320 is communicated with the second communicating-groove structure 130, and another side of the first outlet structure 320 is communicated with the second through hole 520. One side of the second inlet structure 410 is communicated with the third communicating-groove structure 220, and another side of the second inlet structure 410 is communicated with the third through hole 610. One side of the second the outlet structure 420 is communicated with the fourth communicating-groove structure 230, and another side of the second the outlet structure 420 is communicated with the fourth through hole 620.

Therefore, the first heat-exchange fluid F1 with higher temperature can flow into the first guiding channel C1 through the first through hole 510 and the first inlet structure 310, and flows out of the heat exchanger 10 through the first outlet structure 320 and the second through hole 520 after flowing out of the first guiding channel C1. On the other hand, the second heat-exchange fluid F2 with lower temperature can flow into the second guiding channel C2 through the third through hole 610 and the second inlet structure 410, and flows out of the heat exchanger 10 through the second the outlet structure 420 and fourth through hole 620 after flowing out of the second guiding channel C2. By the above connection, the heat-exchange process can be performed between the first heat-exchange fluid F1 with higher temperature and the second heat-exchange fluid F2 with lower temperature of the heat exchanger 10. In the present embodiment, the heat exchanger 10 further includes a seventh fin 700 and an eighth fin 800. The seventh fin 700 and the eighth fin 800 are disposed in the two sides of the assembly of the first fin 100, the second fin 200, the third fin 300, the fourth fin 400, the fifth fin 500, and sixth fin 600 along the assembly axis L1, and the heat-exchange fluids can flow into or out of the heat exchanger 10 through a opening disposed in the seventh fin 700 or the eighth fin 800.

The present embodiment takes the stagger of a first fin 100 and a second fin 200 along the assembly axis L1 mainly for example. In other embodiments, multiple first fins 100 can be assembled in advance, and multiple second fins 200 can be assembled in advance. And then, the assembly of the first fins 100 and the assembly of the second fins 200 can be staggered to constitute another heat exchanger. About the staggered method of the assembly of the first fins 100 and the second fins 200, the present invention does not have any limitation. In addition, the present embodiment is constituted of at least a first fin 100 and at least a second fin 200 mainly, the assembled type of the third fin 300, the fourth fin 400, the fifth fin 500, the fifth fin 500, the sixth fin 600, the seventh fin700, and the eighth fin800 opposite to the location of the first fin 100 and the second fin 200 as described in above is one of various embodiments. It is within the scope and spirit of the present invention as long as the appropriate disposing type for the first guiding channel C1 and the second guiding channel C2 flowing smoothly, and the present invention does not have any limitation.

To sum up, in the heat exchanger of the invention, at least two fins are set with multiple communicating-groove structures and connecting-groove structure in the heat exchanger respectively. In each fin, a communicating-groove structure is not communicated with a connecting-groove structure, and one communicating-groove structure is not communicated with another communicating-groove structure. When the fins are assembled, a communicating-groove structure of one fin is communicated with the adjacent communicating-groove structure through a connecting-groove structure of another fin. The communicating-groove structures are disposed in heat exchanger densely by various arrangements, further have a guiding channel with a good heat-exchange efficiency. Thus, the heat exchanger of the invention has two guiding channels to perform the heat-exchange process for the fluids with different temperatures.

In addition, since the heat exchanger of the invention is assembled by at least two types of fins staggered with each other and each fin has multiple communicating-groove structures and a connecting-groove structure, the heat-exchange fluid is forced to be confluent or separated constantly when The heat-exchange fluid flows into the heat exchanger. This increases the contact area between the heat-exchange fluid and heat exchanger substantially, and increases the rate of the heat-exchange process of heat-exchange fluids to achieve good heat-exchange performance.

Although the invention has been described with reference to the above embodiments, it will be apparent to one of the ordinary skill in the art that modifications to the described embodiments may be made without departing from the spirit of the invention. Accordingly, the scope of the invention will be defined by the attached claims rather than by the above detailed descriptions.

## Claims

1. A heat exchanger, comprising:
at least first fin, having a first body, a first communicating-groove structure, a second communicating-groove structure, and a first connecting-groove structure, the first communicating-groove structure, the second communicating-groove structure, and the first connecting-groove structure are disposed in the first body, the first connecting-groove structure has multiple first connecting-groove assemblies arranged in the first body along a disposing axis; and
at least a second fin, having a second body, a third communicating-groove structure, a fourth communicating-groove structure, and a second connecting-groove structure, the third communicating-groove structure, the fourth communicating-groove structure, and the second connecting-groove structure are disposed in the second body, the second connecting-groove structure has multiple second connecting-groove assemblies arranged in the second body along the disposing axis,
wherein each first fin and each second fin are connected along a assembly axis, the second connecting-groove assemblies are communicated with the first communicating-groove structure and the second communicating-groove structure, the first connecting-groove assemblies are communicated with the third communicating-groove structure and the fourth communicating-groove structure, the first communicating-groove structure, the second connecting-groove structure, and the second communicating-groove structure constitute a first guiding channel, the third communicating-groove structure, the first connecting-groove structure, and the fourth communicating-groove structure constitute a second guiding channel, a first heat-exchange fluid flows in the first guiding channel, a second heat-exchange fluid flows in the second guiding channel.

2. The heat exchanger as recited in claim 1, wherein one end of each second connecting-groove assembly of the second fin is overlapped with the first communicating-groove structure of the adjacent first fin in a connecting axis, the other end of each second connecting-groove assembly is overlapped with the second communicating-groove structure of the first fin, one end of each first connecting-groove assembly of the first fin is overlapped with the third communicating-groove structure of the adjacent second fin along the connecting axis, the other end of each first connecting-groove assembly is overlapped with the fourth communicating-groove structure of the second fin.

3. The heat exchanger as recited in claim 2, wherein the assembly axis, the disposing axis, and the connecting axis are vertical to each other, each first fin and each second fin are staggered along the assembly axis, the first guiding channel and the second guiding channel are not communicated with each other, and the second fin is an inverted state of the first fin.

4. The heat exchanger as recited in claim 2, wherein the first communicating-groove structure has multiple first communicating-groove assemblies arranged in the first body along the disposing axis, the third communicating-groove structure has multiple third communicating-groove assemblies arranged in the second body along the disposing axis, one end of each second connecting-groove assembly of the second fin is overlapped with the first communicating-groove assembly of the adjacent first fin along the connecting axis, the other end of each second connecting-groove assembly is overlapped with the second communicating-groove structure along the connecting axis, one end of each first connecting-groove assembly of the first fin is overlapped with the third communicating-groove assembly of the adjacent second fin along the connecting axis, the other end of each first connecting-groove assembly is overlapped with the fourth communicating-groove structure along the connecting axis, the first communicating-groove assemblies and the first connecting-groove assemblies arranged in the first body are staggered along the disposing axis, the third communicating-groove assemblies and the second connecting-groove assemblies arranged in the second body are staggered along the disposing axis.

5. The heat exchanger as recited in claim 4, wherein each first communicating-groove assembly has at least a first communicating-groove unit arranged in the first body along the connecting axis, each first connecting-groove assembly has at least a first connecting-groove unit arranged in the first body along the connecting axis, each third communicating-groove assembly has at least a third communicating-groove unit arranged in the second body along the connecting axis, each second connecting-groove assembly has at least a second connecting-groove unit arranged in the second body along the connecting axis, one end of the second connecting-groove unit of the second fin is overlapped with one end of the first communicating-groove unit of the adjacent first fin, the other end of the second connecting-groove unit is overlapped with one end of another first communicating-groove unit of the first fin or the second communicating-groove structure of the first fin, one end of the first connecting-groove unit of the first fin is overlapped with one end of the third communicating-groove unit of the adjacent second fin, the other end of the first connecting-groove unit is overlapped with one end of another third communicating-groove unit of the second fin or the fourth communicating-groove structure of the second fin.

6. The heat exchanger as recited in claim 5, wherein the two first communicating-groove units overlapped with the second connecting-groove unit are arranged in the first body along the connecting axis closely, and the two third communicating-groove units overlapped with the first connecting-groove unit are arranged in the second body along the connecting axis closely.

7. The heat exchanger as recited in claim 1, further includes a third fin and a fourth fin, the fourth fin is an inverted state of the third fin, the third fin and the fourth fin are disposed in the two sides of the assembly of the first fin and the second fin along the assembly axis respectively, the third fin has a first inlet structure and a first outlet structure, the fourth fin has a second inlet structure and a second the outlet structure, the first inlet structure and the first outlet structure are connected to the two ends of the first guiding channel, the second inlet structure and the second outlet structure are connected to the two ends of the second guiding channel, the first inlet structure is communicated with the first communicating-groove structure, the first outlet structure is communicated with the second communicating-groove structure, the second inlet structure is communicated with the third communicating-groove structure, the second outlet structure is communicated with the fourth communicating-groove structure.

8. The heat exchanger as recited in claim 7, further includes a fifth fin and a sixth fin, the fifth fin and the sixth fin are disposed in the two sides of the assembly of each first fin, each second fin, each third fin, and each fourth fin along the assembly axis respectively, the fifth fin has a first through hole and a second through hole, the sixth fin has a third through hole and a fourth through hole, one side of the first inlet structure is communicated with the first communicating-groove structure, another side of the first inlet structure is communicated with the first through hole, one side of the first outlet structure is communicated with the second communicating-groove structure, another side of the first outlet structure is communicated with the second through hole, one side of the second inlet structure is communicated with the third communicating-groove structure, another side of the second inlet structure is communicated with the third through hole, one side of the second outlet structure is communicated with the fourth communicating-groove structure, another side of the second outlet structure is communicated with the fourth through hole, the sixth fin is the inverted state of the fifth fin.
